# EUROPÄISCHE PATENTSCHRIFT

(11) **EP 0 896 567 B1**
(45) Veröffentlichungstag und Bekanntmachung des Hinweises auf die Patenterteilung: **16.10.2002**
(21) Anmeldenummer: 98908036.1
(22) Anmeldetag: 02.02.1998
(51) Int. Cl.: C01B 25/46

(54) **VERFAHREN ZUR REINIGUNG VON NASSVERFAHRENSPHOSPHORSÄURE**
WET-PROCESS TECHNIQUE FOR REFINING PHOSPHORIC ACID
PROCEDE DE PURIFICATION D'ACIDE PHOSPHORIQUE PAR VOIE HUMIDE

(30) Priorität: 03.02.1997 DE 19703884
(43) Veröffentlichungstag der Anmeldung: 17.02.1999
(73) Patentinhaber: BK Giulini Chemie GmbH & Co. OHG, 67065 Ludwigshafen (DE)
(72) Erfinder: POTENCSIK, Istvan, D-68169 Mannheim (DE); MAURER, Alexander, D-68219 Mannheim (DE)
(86) Internationale Anmeldenummer: EP9800536
(87) Internationale Veröffentlichungsnummer: WO98033741

(56) Entgegenhaltungen:
- FR-A- 2 100 765
- FR-A- 2 249 833
- FR-A- 2 374 262
- US-A- 3 556 739
- US-A- 4 877 594

## Beschreibung

Gegenstand der vorliegenden Erfindung ist ein Verfahren zur Reinigung einer wäßrigen Phosphorsäuren, die nach dem Naßverfahren erhalten wurde mit einem organischen Lösungsmittelgemisch. Das Verfahren wird nach dem Prinzip der Gegenstromextraktion in mehreren Stufen durchgeführt.

Unter Naßverfahrensphosphorsäure wird in der vorliegenden Erfindung eine wäßrige Phosphorsäure verstanden, die durch Zersetzung von Rohphosphat mit Säure, vorzugsweise Schwefelsäure hergestellt worden ist und deren P₂O₅-Konzentration zwischen 40 bis 62 Gew. % liegt. Eine derartige Säure enthält eine Anzahl von anorganischen Verunreinigungen, die bei der weiteren Verwendung dieser Säure stören und entfernt werden müssen.

Zur Gewinnung von reiner Phosphorsäure durch Extraktion mit organischen Lösungsmitteln, die mit Wasser nicht oder begrenzt mischbar sind, sind bereits eine große Anzahl von Verfahren vorgeschlagen worden.
Bei den bekanntgewordenen Verfahren werden Lösungsmittel, z. B. Alkohole, Ketone, Ether und Ester der Phosphorsäure eingesetzt.

Es gibt jedoch in der Praxis nur wenig bewährte Verfahren. Alle Verfahren weisen den Nachteil auf, daß die eingesetzten Lösungsmittel nicht in der Lage sind, das in der Naßverfahrensphosphorsäure vorhandene Wasser aufzunehmen. Dies bedingt, daß der Extraktionsgrad d. h die erzielbare Ausbeute an Phosphorsäure durch das verminderte Wasseraufnahmevermögen der Lösungsmittel bestimmt wird. Aus diesem Grunde muß das im Kreislauf geführte, mit Wasser teilweise mischbare, organische Lösungsmittel, insbesondere die Alkohole, ganz oder teilweise entwässert werden. Verfahren dieser Art sind z. B. in den Patenten DE-C 23 21 751, DE-C 23 34 019, DE-C 21 27 141 und DE-C 26 57 189 beschrieben. Der Extraktionsgrad ist bekanntlich von der P₂O₅-Konzentration der Rohsäure, von der Anzahl der Extraktionsstufen, vom Lösungsmittel zu Säureverhältnis und von der zurückgeführten Waschwassermenge abhängig.

In der EP-A1 0 111 802 ist der Verteilungskoeffizient bei Verwendung von wasserfreiem Alkohol vergleichsweise größer als bei Verwendung der wassergesättigten Alkohole. Die P₂O₅-Ausbeute beträgt hier nur 50 bis 60 Gew. %. Trotzdem ändert dies wenig daran, daß zur Erzielung maximaler Ausbeuten eine hohe Extraktionsstufenzahl und gleichzeitig ein hohes Lösungsmittel-Säure Verhältnis von 8:1 bis 20:1 erforderlich ist.

Naßverfahrensphosphorsäure läßt sich auch durch das sog. Splittingverfahren extrahieren. Dieses Verfahren beruht darauf, daß aus der Rohsäure nur ein gewisser Teil des P₂O₅, ca. 40-60 Gew. % extrahiert wird.
Eine typische Arbeitsweise ist in US-A 3,318,661 beschrieben. Danach wird die Rohsäure mit ca. 48-62 Gew. % P₂O₅ mit Isopropylether in einem Gewichtsverhältnis von 1 : 0,5 bis 1,5 extrahiert, wobei etwa 40 % des P₂O₅ in die organische Phase übergeht. Aus dem Isopropylether-Extrakt wird die gereinigte Phosphorsäure dadurch gewonnen, daß man soviel Wasser zusetzt, daß aus der organischen Phase eine wäßrige Phosphorsaurelösung mit einem P₂O₅-Gehalt von 48 Gew. % abgeschieden wird. Nachteilig bei diesem Verfahren ist, daß der Isopropylether-Extrakt nicht gewaschen werden kann und deshalb nur eine Phosphorsäure mit einer minderen Qualität hergestellt werden kann. Die Einstellung eines größeren Säure-Lösungsmittelverhältnisses, zur Erzielung einer größeren Selektivität, ist nicht möglich, weil sich dabei eine dritte Phase bildet.
Ein weiterer Nachteil dieses Verfahrens besteht darin, daß die Rohsäure von ca. 48 Gew.% P₂O₅ mindestens bis auf 57 Gew. % P₂O₅ aufkonzentriert werden muß, um eine P₂O₅-Ausbeute von 60 % zu erreichen.

Die Verbesserung der Selektivität wurde in US-A-3,903,247 beschrieben, wonach die Rohsäure mit einem Lösungsmittelgemisch, bestehend aus 75-95 % eines mit Wasser nicht mischbaren C2-C5 Ethers und 5-25 % eines niederen C3-C8 Alkohols, extrahiert wird. Ein besonderer Nachteile dieses Verfahrens besteht in der schlechten Ausbeute und vor allem auch darin, daß zuviel Säure im Raffinat verbleibt. Die Qualität der so hergestellten Säure ist vor allem nur als "technisch" einzustufen, d.h. es ist nicht ohne großen technischen Aufwand möglich, eine höhere Qualität herzustellen.

Weitere Extraktionsverfahren sind in DE-A 23 20 877 und DE-A 35 56 739 beschrieben, bei dem Dialkylketone als Lösungsmittel in einem Gewichtsverhältnis zur Säure von 0,5 bis 2.0:1 eingesetzt werden. Ein Vorteil dieser Verfahren ist, daß der Keton-Extrakt, im Gegensatz zum Ether-Extrakt, durch Waschen mit Wasser oder Phosphorsäure gereinigt werden kann. Die Qualität der gereinigten Phosphorsäure ist mäßig, weshalb auch ein weiterer, aurwendiger Reinigungsschritt durch Eindicken und Kristallisation der Phosphorsäure durchgeführt werden muß.

Es stellte sich also die Aufgabe, die in den bekannten Extraktionsverfahren auftretenden Nachteile zu beseitigen, insbesondere eine Phosphorsäure mit hoher Reinheit und großer Ausbeute herzustellen. Solche hochreinen Phosphorsäuren sind z.B. in der Lebensmittelindustrie erforderlich.

Die gestellte Aufgabe konnte überraschenderweise gemäß dem bennspruchten Verfahren gelöst werden, das insbesondere dadurch gekennzeichnet ist, daß eine vorgereinigte Phosphorsäure in einer oder mehrere Stufen umfassenden Extraktion mit rezirkulierendem Lösungsmittelgemisch extrahiert wird, das ein mit Wasser nicht oder nur begrenzt mischbares Lösungsmittel und ein mit Wasser unbegrenzt mischbares Lösungsmittel enthält, wobei das Mischungsverhältnis so gewählt ist, daß das Gemisch das freie Wasser aus der Phosphorsäure aufnehmen kann. Die vorgereinigte Phosphorsäure wird mit dem Lösungsmittelgemisch vermischt, und diese Phase wird dann in einer mehrstufigen Gegenstrombehandlung mit einer Alkali und/oder Ammoniumionen enthaltenden Lösung gewaschen und die Waschlösung anschließend wieder in die Ausgangsphosphorsäure oder in die Extraktionsstufe zurückgeleitet.

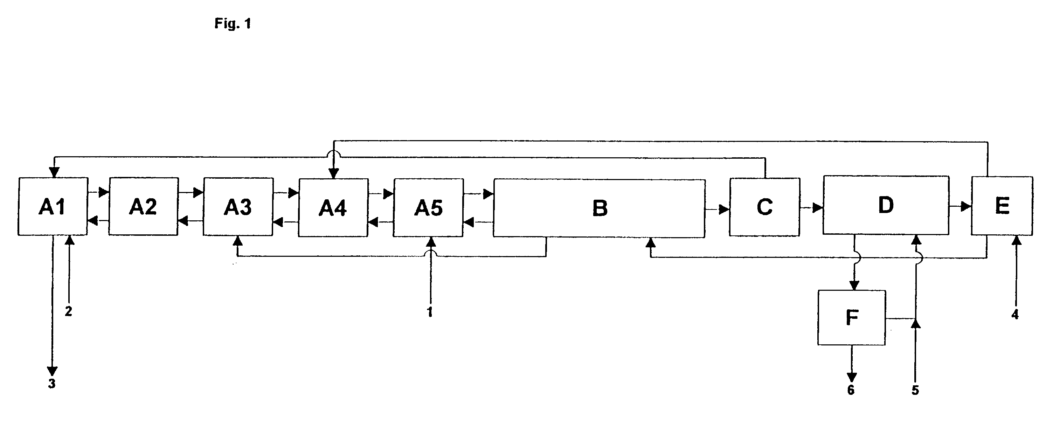

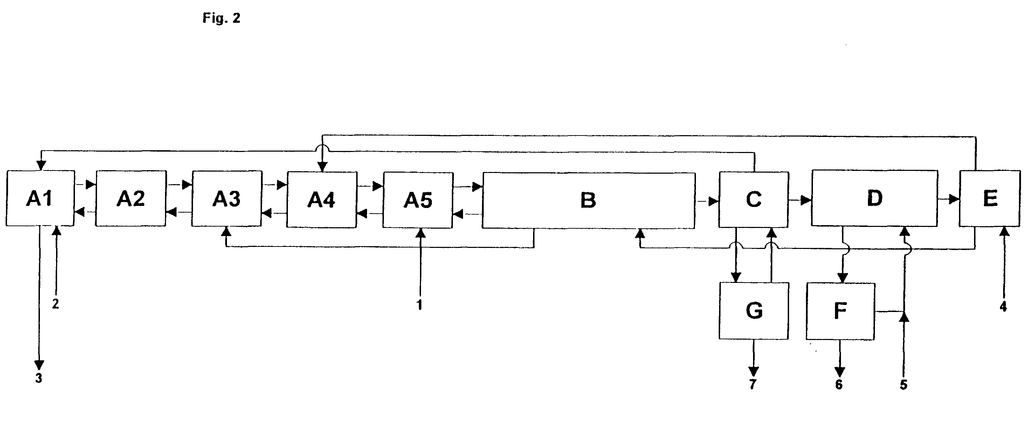

Das erfindungsgemäße Verfahren umfaßt folgende Verfahrensschritte, wobei die hier aufgeführten Ziffern und Buchstaben sich auf die Figuren 1 bzw. 2 beziehen:
A(5) Die vorgereinigte und gegebenenfalls auch Alkaliionen enthaltende Phosphorsäure wird mit dem Lösungsmittelgemisch vermischt und einer im Gegenstrom arbeitenden Mehrstufen-Extraktion, bestehend aus 3-5 Misch-/Absetz Extraktoreinheiten unterworfen. Hierbei entsteht eine Bodenphase und eine obere Phase, auch als Extrakt genannt. Die entstehende Bodenphase wird weiter in 1 bis 3 Extraktoreinheiten mit dem mit Wasser unbegrenzt mischbaren Lösungsmittel behandelt, abhängig davon, ob Schwefelsäure in die Bodenphase zudosiert wird.
A(4) Hier wird die Bodenphase aus A(5) mit dem wasserlöslichen und wasserunlöslichem Lösungsmittel vermischt und erneut extrahiert. Die Bodenphase enthält vor allem Wasser, freie Säure und Kationen, wie Aluminium, Magnesium, Eisen etc. in Form ihrer Phosphatsalze.
A(2)-A(3) Die aus A(4) kommende Bodenphase wird mit dem Extrakt der Stufen A(2) und
A(3) vermischt um einen Teil der Sulfationen aus der organischen (lösungsmittelhaltigen) Phase der Stufen A(2) und A(3) zu entfernen,
A(1) Die wäßrige Phase aus A(2) und A(3) wird mit Schwefelsäure versetzt und erneut mit dem wasserlöslichem Lösungsmittel extrahiert.
   Wenn man eine weitgehend sulfatfreie Phosphorsäure herstellen will, dann empfiehlt es sich, keine Schwefelsäure in die Extraktionsstufe zu dosieren. In diesem Falle sind insgesamt 3 Extraktoreinheiten ausreichend mit der Konsequenz, daß der P₂O₅-Verlust in dem Raffinat zwischen 8-15 Gew.-% liegt, je nach Kationen- und Sulfat-Gehalt in der eingesetzten Phosphorsäure. Um den P₂O₅-Verlust im Raffinat bis auf 2-4 Gew.-% senken zu können, muß man die Schwefelsäure in die Bodenphase dosieren. Es empfiehlt sich, die Sulfationen der Äquivalentmenge der Kationen in der eingesetzten Säure in Form von Schwefelsäure zuzusetzen. In diesem Fall können bis zu 5 Extraktoreinheiten benutzt werden. Das an dieser Stelle entstehende Raffinat, das noch geringe Mengen Lösungsmittel (ca. 10 bis 15 g/l) enthält, wird destilliert und das Rest-Raffinat als Abfall abgeführt.
A(5) Der hier entstehende Extrakt, der eine Lösungsmittelgemisch-Phosphorsäure-Wasser enthaltende Phase ist, wird mit saurem Alkaliphosphat in B in einer Batterie von 7 im Gegenstrom betriebenen Misch/Absetz-Extraktoreinheiten mit einer sauren Alkaliphosphat-Lösung gewaschen. Das Volumenverhältnis von Waschlösung zu Extrakt liegt zwischen 0,02 bis 0,03 : 1. Je nach gewünschter Reinheit kann die Anzahl der Extraktionsstufen variiert werden. Es gilt, daß je mehr Stufen durchlaufen werden, um so größer ist der Reinigungsgrad.
C. Die gewaschene Lösungsmittelgemisch-Phosphorsäure-Wasser enthaltende Phase wird in einen kontinuierlich arbeitenden Destillationsapparat (C) geleitet, um das niedriger siedende, mit Wasser unbegrenzt mischbare Lösungsmittel abzutrennen und nach Abkühlung auf ca. 30 °C in die Mehrstufen-Extraktion, Stufe A(1) zu leiten. Bei dieser Operation erhält man ein Zwei-Phasen-System, weil hinsichtlich des Wassers das organische Lösungsmittel übersättigt ist.
D Das aus Stufe C nach der Destillation übriggebliebene wasserunlösliche Lösungsmittelgemisch, das noch Säure enthält, wird mit dem Kondensat aus der Stufe F gewaschen. Damit reichert sich in der wäßrigen Phase eine verdünnte Säure an. Allgemein reicht das Wasser für die Rückextraktion der Säure nicht aus. Da mit dem Raffinat Wasser dem System entzogen wird, muß zusätzlich eine geringe Menge Wasser zugegeben werden.
F. Die aus D gewonnene Phosphorsäure wird in einem Verdampfer auf einen P₂O₅-Gehalt von 45 % aufkonzentriert und kann in F abgetrennt werden
E. Die mit Wasser nicht oder mit Wasser begrenzt mischbare Lösungsmittel-Phase nach der Rückextraktionsstufe enthält noch etwa 5 bis 8 Gew.-% P₂O₅ bezogen auf das eingesetzte P₂O₅, die in der Neutralisationsstufe E in einer Misch/Absetz-Extraktoreinheit, mit einer 50 %igen Alkalihydroxidlösung bis pH 2 behandelt wird, wobei eine saure Alkaliphosphatlösung entsteht, die in die Waschstufe B zurückgeleitet wird. Das wassergesättigte Lösungsmittel wird in die Extraktionsstufe A(4) geleitet.

Als mit Wasser nicht oder nur begrenzt mischbare Lösungsmittel können aliphatische oder cyclische Ketone oder Ether mit C₄-C₁₀ bzw. Alkohole mit C₄-C₈ eingesetzt werden. Solche Lösungsmittel sind z. B. Methyl-Isopropylketon, Diisopropylketon, Methyl-i-Butylketon, Diisobutylketon, Cyclohexanon, Diisopropylether, Diisobutylether, i-Amylalkohol, Hexanol.

Als mit Wasser unbegrenzt mischbare Lösungsmittel können Alkohol mit C₁-C₃, z. B. Methanol, Ethanol und i-Propanol und n-Propanol oder Aceton Anwendung finden.

Wichtig ist bei dem erfindungsgemäßen Verfahren, daß im Lösungsmittelgemisch, das mit Wasser unbegrenzt mischbare Lösungsmittel einen niedrigeren Siedepunkt hat, als das mit Wasser nicht oder nur begrenzt mischbare Lösungsmittel.

Das geeignete Mischungsverhältnis der beiden Lösungsmittel soll so gewählt werden, daß das Lösungsmittelgemisch das erforderliche Wasseraufnahmevermögen besitzt.

Die im Handel erhältlichen Naßverfahrensphosphorsäuren haben einen P₂O₅-Gehalt von 50-55 Gew. %, je nach Kationen- und Sulfatgehalt. Für diese Phosphorsäuren sind z. B. folgende Lösungsmittelgemische geeignet:
- i-Amylalkohol-Isopropanol im Volumenverhältnis von 90:10 bis 60:40
- Methyl-i-Butylketon-Isopropanol im Volumenverhältnis von 80:20 bis 50:50
- Diisobutylether-Isopropanol im Volumenverhältnis von 70 : 30 bis 50 : 50.

Das Volumenverhältnis von Phosphorsäure zu organischem Lösungsmittelgemisch beträgt 1:1 bis 1:10, bevorzugt 1:2 bis 1:6.
Wenn man Ether als Lösungsmittel verwendet, dann entfällt die Rückextraktionsstufe, da Ether einen negativen Temperaturgradienten in Bezug auf die Auflösung der Phosphorsäure besitzen und nach dem Abdestillieren des mit Wasser unbegrenzt mischbaren Lösungsmittels bei Temperaturen zwischen 50 - 80 °C die gelöste Phosphorsäure mit dem Wasser ausscheidet. Diese Phosphorsäure hat einen P₂O₅-Gehalt von ca. 50 Gew.-%, wenn man das Wasser. welches bei Aufkonzentrierung der Phosphorsäure bis auf 55 Gew.-% P₂O₅ entsteht, in die Destillation führt.
Die Temperatur während der Gesamtextraktion kann zwischen 5 und 90 °C liegen, vorzugsweise beträgt sie 30 - 80 °C.
Der Alkaligehalt, berechnet als Oxid, sollte bei der Extraktion und/oder Vorreinigungsstufe der Naßverfahrensphosphorsäure mit dem organischen Lösungsmittelgemisch 0,1 bis 3 Gew.-%, vorzugsweise 0,1 bis 1 Gew.-% bezogen auf die Phosphorsäure betragen.
Der Alkaligehalt in der Phosphorsäure wird durch Vermischen mit der zurückgeführten Waschlösung entweder in der Vorreinigung oder während der Extraktion eingestellt. Je nach Herkunft der Phosphorsäure enthält sie mehr oder weniger Verunreinigungen in Form von Al₂O₃, MgO etc. Diese Kationen bilden stabile Hydrate in Form von Aquakomplexen und binden so das Wasser in der Rohsäure.
Wenn der Al₂O₃ Gehalt der Säure über 0,6 Gew. % liegt, z. B. im Falle der Säure aus Marokko, dann empfiehlt es sich, die Alkaliionen während der Vorreinigung zuzusetzen. Wenn der Al₂O₃, Gehalt der Säure über 1 Gew. % liegt, z. B. bei der aus North-Carolina/USA oder aus Israel stammenden Säure, dann sollte die Alkaliionen enthaltende Waschlösung während der Extraktion mit wassermischbarem Lösungsmittel versetzt werden.
Eine Vorreinigung der Naßverfahrensphosphorsäure für die Extraktion ist immer erforderlich.
Die Vorreinigung kann sowohl Fällungsreaktionen mit CaCO₃ oder Rohphosphat, Natriumsulfid und aktiver Kieselsäure umfassen, um das gelöste Arsen und die Fluorid- und Sulfationen zu entfernen, als auch Adsorptionsverfahren mittels Aktivkohle, um die organischen Verunreinigungen zu eliminieren.

Der Gegenstand der Erfindung wird anhand der Zeichnungen 1 und 2 , die das erfindungsgemäße Verfahren in einem Fließschema darstellen, und durch Beispiele näher erläutert.
Die Figur 2 zeigt eine weitere erfindungsgemäße Variante des Verfahrens. Durch diese Variante ist es möglich, die gewonnene Phosphorsäure in zwei Qualitäten, in einer technischen und einer hochreinen Qualität zu erhalten. In diesem Fall wird der Prozeß, wie in Figur 1 beschrieben, durchgeführt, jedoch mit dem Unterschied, daß die Anzahl der Extraktoren in der Waschstufe B von 7 auf 4 reduziert werden kann. Die ausgeschiedene wäßrige Phosphorsäure, die nach dem Verdampfen des mit Wasser unbegrenzt mischbaren Lösungsmittels im Destillationsapparat entsteht, wird abgetrennt und im Verdampfer bis zu einem P₂O₅-Gehalt von 55 Gew.-% zu einer technischen Qualität aufkonzentriert (in G).
Das entstehende Wasser kann ganz oder teilweise in den Destillationsapparat zurückgeführt werden, um die Menge der wäßrigen Phosphorsäure zu steuern.

### Beispiel 1

Eine aus Marokko-Phosphat hergestellte Naßverfahrensphosphorsäure wird mit der Waschlösung aus der Reinigungsstufe B, Fig. 1 vermischt und in an sich bekannter Weise mit Kieselsäure, Rohphosphat, Natriumsulfid und Aktivkohle behandelt.
Die so vorgereinigte Phosphorsäure hat folgende Gehalte:

| | | | |
|---|---|---|---|
| P₂O₅ | 53 Gew. % | MgO | 0,59 Gew.% |
| SO₄² | 1,5 Gew. % | Na₂O | 0,60 Gew. |
| Fe₂O₃ | 0,43 Gew. % | As | < 1ppm |
| Al₂O₃ | 0,63 Gew.% | | |

In diesem Beispiel wurde ein Lösungsmitteigemisch, bestehend aus 70 Vol.-% i-Amylalkohol und 30 Vol.-% Isopropanol, eingesetzt. Das Volumenverhältnis von Phosphorsäure zu Alkoholgemisch betrug 1:5.
10 l/h dieser Phosphorsäure werden mit ca. 51 l/h Alkoholgemisch-Phosphorsäure-Wasser enthaltender Phase aus der Stufe A(4) bei einer Temperatur von 25 °C behandelt. Im Trennbehälter fallen kontinuierlich 3,4 l/h einer wäßrigen Bodenphase an. Diese Bodenphase wird erneut in der Stufe A(4) mit 35 l/h im Kreislauf geführten und mit Wasser gesättigtem i-Amylalkohol und mit 16 l/h Isopropanol-Phosphorsäure-Schwefelsäure-Wasser enthaltender Phase aus der Stufe A(3) innig vermischt. Die wäßrige Bodenphase aus der Stufe A(2) wird mit 0,28 l/h einer 94%igen Schwefelsäure vermischt und mit 15 l/h Isopropanol aus der Destillationsstufe in den Stufen A(1) bis A(3) im Gegenstrom extrahiert.
Bei dieser Behandlung fallen 1,8 l/h einer wäßrigen Bodenphase mit einem P₂O₅-Gehalt von 9 Gew.-% an, was einem P₂O₅-Verlust von 2,9 Gew.-% bezogen auf das eingesetzte P₂O₅ entspricht. Sie kann in der Düngemittel-Produktion eingesetzt werden.
Die obere Alkoholgemisch-Phosphorsäure-Wasser enthaltende Phase aus der Extraktionsstufe A(5) wird in Gegenstrom in einer Batterie (B) von 7 Misch/Trennbehältern mit Alkaliionen und Phosphorsäure enthaltender Waschlösung, die durch Zugabe von Natriumhydroxyd-Lösung in der Neutralisationsstufe (E) am Ende des Prozesses entsteht, gewaschen. Nach dieser Behandlung fallen 1,5 l/h Waschlösung an, welche in die Vorreinigung der Naßverfahrensphosphorsäure geleitet wird.
Die gewaschene Alkoholgemisch-Phosphorsäure-Wasser enthaltende Phase wird in eine kontinuierlich arbeitende Destillationsapparatur geleitet und bei einer Temperatur von 80 - 82 °C 15 l/h Isopropanol verdampft. Das Isopropanol wird in die Extraktionsstufe A(1) geleitet.
Bei dieser Operation enthält man schon ein Zwei-Phasen-System, weil hinsichtlich Wasser der i-Amylalkohol übersättigt ist.
Die Phosphorsäure wird aus dem Zweiphasen-System im Gegenstrom in einer Batterie von 4 Misch-/Absetzbehältern mit 6,8 l/h Wasser rückextrahiert. Hierbei entstehen 14,7 l/h einer gereinigten Phosphorsäure mit einem P₂O₅-Gehalt von 40 Gew.-%, die in einem Verdampfer bis zu einer Konzentration von 55 Gew.-% P₂O₅ eingedampft wird. Es fallen wird. Es fallen 5,5 l/h Kondenswasser an, welches in der Rückextraktionsstufe eingesetzt wird. Die Ausbeute an P₂O₅ beträgt 97,2 %
Die wassergesättigte i-Amylalkohol-Phase, welche noch etwas Phosphorsäure enthält, wird mit 0,18 l/h einer 50 %igen Natriumhydroxid-Lösung bis pH 2 neutralisiert. Im Trennbehälter fallen 1,2 l/h einer Natriumphosphat-Lösung an. Diese Lösung wird in der Waschstufe eingesetzt. Der wassergesättigte i-Amylalkohol wird in die Extraktionsstufe A(4) geleitet. Die Analysendaten zeigen den Reinheitsgrad der gereinigten Phosphorsäure in ppm, bezogen auf% P₂O₅:

| | | | |
|---|---|---|---|
| SO₄²⁻ | < 600 | Ni | < 1 |
| CaO | < 5 | Cr | < 1 |
| MgO | < 10 | Cu | < 1 |
| Al₂O₃ | < 10 | Zn | < 2 |
| Fe₂O₃ | < 5 | Cd | < 1 |
| | | V | < 1 |

### Beispiel 2:

Bei diesem Versuch wird das gleiche Alkoholgemisch, wie im Beispiel 1 beschrieben, eingesetzt. Das Volumenverhältnis Alkoholgemisch : Phosphorsäure beträgt jedoch 4 : 1. Eine im Handel erhältliche vorgereinigte grüne Phosphorsäure, die durch Aufschluß von kalziniertem Israel-Phosphat mit Schwefelsäure hergestellt wurde, wird eingesetzt. Sie hat folgende chemische Zusammensetzung:

| | | | |
|---|---|---|---|
| P₂O₅ | 54 Gew.% | Al₂O₃ | 1,92 Gew.% |
| SO₄² | 2,5 Gew.% | Cd | 6 ppm |
| MgO | 0,51 Gew.% | As | < 1 ppm |
| CaO | 0,08 Gew.% | Na₂O | 0,09 Gew. % |
| Fe₂O₃ | 0,5 Gew.-% | | |

10 l/h dieser Phosphorsäure werden analog dem in Beispiel 1 beschriebenen Verfahren durchgeführt, jedoch mit dem Unterschied, daß die Extraktion nur in einer Batterie von insgesamt 3 Misch/Absetzbehältern in der Weise erfolgt, daß die grüne Phosphorsäure in der Stufe A(3) mit 41 l/h Alkoholgemisch-Phosphorsäure-Wasser enthaltende Phase aus der Stufe A(2) extrahiert wird. Die hierbei entstandene Bodenphase wird in der Stufe A(2) mit 28 l/h wassergesättigtem und in Kreislauf geführtem i-Amylalkohol und 13 l/h Isopropanol-Phosphorsäure-Wasser enthaltender Phase aus der Extraktionsstufe A(1) nochmals behandelt. Die Bodenphase aus der Stufe A(2) wird mit der Waschlösung aus der Batterie (Fig. 1, B) kontinuierlich vermischt und ohne Schwefelsäure-Zusatz in der Stufe A(1) mit 12 l/h in Kreislauf geführtem Isopropanol extrahiert, wobei 2 l/h eines wäßrigen Raffinats mit einem P₂O₅-Gehalt von 22 Gew.-% anfällt, was einem P₂O₅-Verlust von 8 Gew.-% entspricht, bezogen auf das eingesetzte P₂O₅.
Das weitere Vorgehen erfolgt wie in Beispiel 1 beschrieben.
Bei der Rückextraktion der gereinigten Phosphorsäure mit Wasser fallen 13 l/h reine Phosphorsäure mit einem P₂O₅-Gehalt von 43 Gew.-% an, was einer Ausbeute an P₂O₅ von 92 % entspricht.
Die Analysendaten der gewonnenen Phosphorsäure sind in der nachstehenden Aufstellung in ppm bezogen auf% P₂O₅, zusammengestellt:

| | | | | | |
|---|---|---|---|---|---|
| SO₄²⁻ | < 100 | Fe₂O₃ | < 5 | Zn | < 1 |
| MgO | < 5 | Ni | < 1 | V | < 1 |
| CaO | < 5 | Cr | < 1 | Cd | < 1 |
| Al₂O₃ | < 10 | Cu | < 1 | As | < 1 |

### Beispiel 3

In diesem Beispiel wurde ein Lösungsmittelgemisch bestehend aus 60 Vol.-% Diisobutylether und 40 Vol.-% Isopropanol als Azeotrop eingesetzt. Das Volumenverhältnis von Phosphorsäure zu Lösungsmittelgemisch betrug 1 : 4.
10 l/h grüne im Beispiel 2 eingesetzte Phosphorsäure werden mit 40 l/h Lösungsmittelgemisch wie im Beispiel 1 beschrieben extrahiert. Der Unterschied zu Beispiel 1 besteht darin, daß die Bodenphase aus der Stufe A(4) mit der Waschlösung aus der Batterie B (Fig. 1, B) kontinuierlich vermischt wird und mit 16 l/h Isopropanol-Phosphorsäure-Schwefelsäure-Wasser enthaltender Phase aus der Stufe A(2) extrahiert wird. Die Bodenphase aus der Stufe A(2) wird mit 0,2 l/h einer 94 %-igen Schwefelsäure vermischt und mit 16 l/h Isopropanol aus der Destillationsstufe in den Stufen A(1) bis A(3) im Gegenstrom extrahiert. In der Stufe A(1) fallen 1,7 l/h Raffinat mit einem P₂O₅-Gehalt von 10,5 Gew. % an, was einem P₂O₅-Verlust von 2,99 % entspricht, bezogen auf das eingesetzte P₂O₅.
Nach dem Waschen der Lösungsmittelgemisch-Phosphorsäure-Wasserphase wird sie mit 2,5 l/h Wasser (aus der Eindampfanlage der Phosphorsäure) versetzt, und das Isopropanol als Azeotrop wird in einem kontinuierlich arbeitenden Destillationsapparat bei einer Temperatur zwischen 80 - 83 °C abdestilliert.
Der Rückstand, bestehend aus Ether, Phosphorsäure und Wasser, trennt sich bei dieser Temperatur in zwei Phasen auf, wobei die wäßrige Phase fast die gesamte Phosphorsäure enthält und einen P₂O₅-Gehalt von 50 Gew.-% hat. Es fallen 10,7 l/h einer wäßrigen Phosphorsäure an. Die Ausbeute an P₂O₅ beträgt 97 %, bezogen auf das eingesetzte P₂O₅.
Die so gewonnene Phosphorsäure wird in einem Verdampfer bis zu einem P₂O₅-Gehalt von 55 Gew.-% aufkonzentriert. Das entstehende Kondensat, ca. 2,5 l/h, wird in den Destillationsapparat gegeben.
Die Ether-Phase enthält noch etwas Phosphorsäure, und sie wird mit 1,0 l/h einer 10%igen Natriumhydroxidlösung ausgewaschen.
Diese alkalische phosphathaltige Lösung wird als Waschlösung in der Reinigungsstufe eingesetzt.

Die Zusammensetzung der Reinsäure in ppm, bezogen auf % P₂O₅:

| | | | | | |
|---|---|---|---|---|---|
| SO₄²⁻ | < 600 | Ni | < 1 | Cd | < 1 |
| Al₂O₃ | < 10 | Cr | < 1 | As | < 1 |
| Fe₂O₃ | < 5 | Cu | < 1 | | |
| MgO | < 10 | Zn | < 1 | | |
| CaO | < 5 | V | < 1 | | |

### Beispiel 4

In diesem Beispiel wird ein Lösungsmittelgemisch, bestehend aus 60 Vol % MethylIsobutylketon und 40 Vol. % Isopropanol als Azeotrop eingesetzt. das Volumenverhältnis von Lösungsmittelgemisch zu Phosphorsäure beträgt 4:1.
10 l/h grüne, vorgereinigte Phosphorsäure werden mit 40 l/h Lösungsmittelgemisch, wie im Beispiel 3 beschrieben, extrahiert. Es fallen 1,5 l/h eines wäßrigen Raffinats mit einem P₂O₅ Gehalt von 11 Gew. % an, was einem P₂O₅ Verlust von 3 %, bezogen auf das eingesetzte P₂O₅, entspricht.
In der Rückextraktionsstufe werden mit 6 l/h Wasser, 13,5 l/h einer gereinigten Phosphorsäure mit einem P₂O₅ Gehalt von 40 Gew. % gewonnen. Die Ausbeute beträgt 97 %.
Die Analysedaten der Reinsäure sind in der Aufstellung in ppm bezogen auf % P₂O₅ zusammengestellt:

| | | | | | |
|---|---|---|---|---|---|
| SO₄²⁻ | < 600 | Ni | < 1 | Cd | < 1 |
| Al₂O₃ | < 10 | Cr | < 1 | As | < 1 |
| Fe₂O₃ | < 5 | Cu | < 1 | | |
| MgO | < 10 | Zn | < 1 | | |
| CaO | < 5 | V | < 1 | | |

### Beispiel 5 (Figur 2)

In diesem Beispiel wird die in Figur 2 dargestellte Variante des Verfahrens durchgeführt. Die Marokko-Phosphorsäure wird wie im Beispiel 1 beschrieben vorbehandelt. Die vorbehandelte Phosphorsäure hat einen P₂O₅ Gehalt von 53 Gew. % und einen SO₄²⁻ Gehalt von 3 Gew. %10 l/h dieser Säure wird mit 50 l/h Alkoholgemisch analog dem Beispiel 1 extrahiert, wobei 1,9 1(h eines wäßrigen Raffinats mit einem P₂O₅ Gehalt von 10 Gew. % anfällt. Der P₂O₅ Verlust beträgt 3,4 %.
Die Alkoholgemisch- Phosphorsäure-Wasser enthaltende Phase aus der Extraktionsstufe A(5) wird in einer Batterie von 5 Misch/Absetzbehältern mit der Waschlösung gewaschen, wobei 1,8 l/h Waschlösung anfällt.
Der gewaschene Alkoholgemisch-Extrakt wird mit 1 l/h Kondenswasser versetzt und das Isopropanol als Azeotrop im Destillationsapparat C verdampft. Es bilden sich zwei Phasen. Im Trennbehälter fallen kontinuierlich 5,9 l/h wäßrige Bodenphase mit einem P₂O₅ Gehalt von 46,9 Gew. % an. Die wäßrige Phosphorsäure mit technischer Qualität wird im Verdampfer G bis zu einer Konzentration von 55 Gew. % P₂O₅ eingedampft. Hierbei fallen 1,4 l/h Kondenswasser an, wovon 1 l/h in dem Destillationsapparat und 0,4 l/h in der Rückextraktionsstufe eingesetzt wird.
Die restliche Phosphorsäure wird aus dem i-Amylalkohol-Extrakt in einer Batterie von 4 Extraktoreinheiten mit 5,3 l/h Wasser rückextrahiert. Es entstehen 8,7 l/h einer wäßrigen Phosphorsäure mit einem P₂O₅ Gehalt von 36 Gew. %. Dies entspricht einer Ausbeute an P₂O₅ von 49,7 %.
Das weitere Vorgehen erfolgt wie im Beispiel 1 beschrieben. Die Analysedaten der so gewonnenen Phosphorsäure in zwei Qualitäten sind in der Aufstellung in ppm bezogen auf % P₂O₅ zusammengestellt:

| | **technische Qualität** | **reine Qualität** |
|---|---|---|
| SO₄²⁻ | 1500 | < 50 |
| Al₂O₃ | < 60 | < 1 |
| Fe₂O₃ | < 50 | < 1 |
| MgO | < 100 | < 1 |
| CaO | < 10 | < 1 |
| Ni | < 2 | < 1 |
| Cr | < 2 | < 1 |
| Cu | < 2 | < 1 |
| Zn | < 50 | < 1 |
| V | < 10 | < 1 |
| Cd | < 1 | < 1 |
| As | < 1 | < 1 |

### Erklärung der Bedeutung der Zahlen in den Figuren 1 und 2:

1. Eingang Rohphosphorsäure
2. Eingang Schwefelsäure
3. Abgang Raffinat
4. Eingang Natronlauge
5. Eingang Wasser
6. Abgang konz. Phosphorsäure (Produkt) reine Qualität
7. Abgang konz. Phosphorsäure (Produkt) technische Qualität

## Patentansprüche

1. Verfahren zur Reinigung einer Naßverfahrensphosphorsäure in einer mehrstufigen Extraktion, wobei die Säure aus dem Naßaufschluß von Rohphosphaten mittels Schwefelsäure hergestellt wird, Alkaliionen enthält und vorgereinigt wird und mit rezirkulierendem Lösungsmittelgemisch extrahiert wird, das Lösungsmittelgemisch aus einem mit Wasser nicht oder nur begrenzt mischbaren Lösungsmittel und einem mit Wasser unbegrenzt mischbaren Lösungsmittel besteht, das Volumenverhältnis von Phosphorsäure zu organischem Lösungsmittelgemisch 1:1 bis 1:10, bevorzugt 1:2 bis 1:6. beträgt und die Temperatur während der Gesamtextraktion zwischen 5 und 90 °C vorzugsweise zwischen 30 - 80 °C liegt, **dadurch gekennzeichnet, daß *die Säure einer im Gegenstrom arbeitenden Mehrstufen-Extraktion unterworfen wird, wobei die Säure in der ersten Stufe (A5) mit dem rezirkulierenden Lösungsmittelgemisch vermischt, die entstehende Bodenphase aus der letzten Stufe (A4) im Gegenstrom mit dem Wasser unbegrenzt mischbaren Lösungsmittel durch weitere Extraktionszonen (A3, A2, A1) durchgeführt und weiter extrahiert und die entstehende Extrakt-Phase aus diesen weiteren Extraktionszonen als Bestandteil des Lösungsmittelgenmisches in die letzte Extraktionsstufe (A4) eingeführt wird, daß die Extrakt-Phase aus der ersten Stufe (A5) einer Destillation unterworfen wird, um das mit Wasser mischbare Lösungsmittel abzutrennen und der ersten Zone (A1) der weiteren Extraktionszonen (A3, A2, A1) zurückzuführen und daß das verbleibende Gemisch einer Rückextraktion unterworfen wird, wobei die mit Wasser nicht oder nur begrenzt mischbare Lösungsmittel-Phase getrennt und als Bestandteil des Lösungsmittelgemisches der letzten Extraktionsstufe (A4) zurückgeführt wird.***

2. Verfahren nach Anspruch 1, **dadurch gekennzeichnet, daß** im Lösungsmittelgemisch, das mit Wasser unbegrenzt mischbare Lösungsmittel einen niedrigeren Siedepunkt hat, als das mit Wasser nicht oder nur begrenzt mischbare Lösungsmittel.

3. Verfahren nach den Ansprüchen 1 bis 2, **dadurch gekennzeichnet, daß** als Lösungsmittel, die mit Wasser nicht oder nur begrenzt mischbare Lösungsmittel, die aliphatischen oder cyclischen C₄-C₁₀ Ketone oder Ether oder C₄-C₈. Alkohole eingesetzt werden, bevorzugt jedoch Methyl-Isopropylketon, Diisopropylketon, Methyl-i-Butylketon, Diisobutylketon, Cyclohexanon, Diisopropylether, Diisobutylether, i-Amylalkohol und Hexanol.

4. Verfahren nach den Ansprüchen 1 bis 3, **dadurch gekennzeichnet, daß** als Lösungsmittel, die mit Wasser unbegrenzt mischbar sind, die C₁-C₃ Alkohole, bevorzugt Methanol, Ethanol, i-Propanol, n-Propanol oder Aceton verwendet werden.

5. Verfahren nach den Ansprüchen 1 bis 4, **dadurch gekennzeichnet, daß** der Alkaligehalt der Phosphorsäure, berechnet als Oxid, bei der Extraktion und/oder Vorreinigungsstufe mit dem organischen Lösungsmittelgemisch 0,1 bis 3 Gew-%, vorzugsweise 0,4 bis 1 Gew.-% bezogen auf die Phosphorsäure beträgt.

6. Verfahren nach den Ansprüchen 1 bis 5 **dadurch gekennzeichnet, daß** der Alkaligehalt, in der Phosphorsäure durch Vermischen mit der zurückgeführten Waschlösung entweder in der Vorreinigung oder vor der Extraktion eingestellt wird.

7. Verfahren nach den Ansprüchen 1 bis 6, **dadurch gekennzeichnet, daß** die nach der Rückextraktion entstehende Lösungsmittelphase, die noch geringe Mengen Phosphorsäure enthält, mit wäßrigem Alkalihydroxyd bei pH 2 neutralisiert wird.

8. Verfahren nach den Ansprüchen 1 bis 7, **dadurch gekennzeichnet, daß** die Vorreinigung der Rohsäure sowohl Fällungsreaktionen mit CaCO₃ oder Rohphosphat, Natriumsulfid und aktiver Kieselsäure, als auch Adsorptionsverfahren mittels Aktivkohle umfaßt.

## Claims

1. Method for cleaning a wet-process phosphoric acid in a multiple-stage extraction process, whereby the acid is made by wet acidulation of rock phosphates with sulphuric acid, it contains alkali ions and is extracted with a recirculating solvent mixture, the solvent mixture comprises a solvent immiscible or incompletely miscible with water and a solvent fully miscible with water, the volume ratio of phosphoric acid to organic solvent mixture is between 1:1 and 1:10, and preferably between 1:2 and 1:6 and the temperature during the entire extraction process lies between 5° and 90° C, and preferably between 30° and 80° C, **characterised in that *the acid is subjected to a multiple-stage extraction process operating in counterflow, whereby in the first stage (A5), the acid is mixed with the recirculating solvent mixture, the resulting base phase from the last stage (A4) is passed in counterflow with the solvent fully miscible with water through further extraction zones (A3, A2, A1) and further extracted and the resulting extract phase from these further extraction zones is introduced as a component of the solvent mixture into the last extraction stage (A4), that the extract phase from the first stage (A5) is subjected to a distillation process in order to separate out the water-miscible solvent and to feed it back into the first zone (A1) of the further extraction zones (A3, A2, A1) and that the remaining mixture is subjected to liquid-liquid extraction, whereby the solvent phase immiscible or incompletely miscible with water is separated and is fed back into the last extraction stage (A4) as a component of the solvent mixture.***

2. Method according to Claim 1, **characterised in that**, in the solvent mixture the solvent fully miscible with water has a lower boiling point than the solvent immiscible or incompletely miscible with water.

3. Method according to Claims 1 to 2, **characterised in that** as solvents immiscible or incompletely miscible with water, the aliphatic or cyclic C₄-C₁₀ ketones or ethers or C₄-C₈ alcohols are used, but preferably methyl-isopropyl ketone, diisopropyl ketone, methyl-i-butyl ketone, diisobutyl ketone, cyclohexanone, diisopropyl ether, diisobutyl ether, i-amyl alcohol and hexanol.

4. Method according to the claims 1 to 3, **characterised in that**, as solvents that are fully miscible with water, the C₁-C₃ alcohols, preferably methanol, ethanol, i-propanol, n-propanol or acetone are used.

5. Method according to the claims 1 to 4, **characterised in that** the alkali content of the phosphoric acid, calculated as oxide, at the extraction and/or precleaning stage with the organic solvent mixture is 0.1 % to 3 % by weight, preferably 0.4 % to 1 % by weight relative to the phosphoric acid.

6. Method according to the claims 1 to 5, **characterised in that** the alkali content is adjusted in the phosphoric acid by mixing with the fed-back washing solution either during the precleaning or before extraction.

7. Method according to the claims 1 to 6, **characterised in that** the solvent phase arising after the liquid-liquid extraction, which still contains small amounts of phosphoric acid is neutralised with aqueous alkali hydroxide at pH 2.

8. Method according to the claims 1 to 7, **characterised in that** the precleaning of the raw acid includes both precipitation reactions with CaCO₃ or rock phosphate, sodium sulphide and active silicic acid, as well as adsorption processes using activated carbon.

## Revendications

1. Procédé de nettoyage d'un acide phosphorique de procédé humide par extraction à plusieurs étages, l'acide étant produit à partir d'une dissolution en milieu humide de phosphates minéraux au moyen d'acide sulfurique, contenant des ions alcalins et étant pré-nettoyé et extrait avec un mélange recirculant de solvants, lequel consiste en un solvant non mélangeable ou faiblement mélangeable à l'eau et en un solvant intégralement mélangeable à l'eau, le rapport volumique de l'acide phosphorique au mélange organique de solvants étant compris entre 1:1 et 1:10, préférentiellement 1:2 à 1:6, et la température pendant toute la durée de l'extraction comprise entre 5 et 90 °C, préférentiellement entre 30 - 80 °C, **caractérisé en ce que *l'acide est soumis à une extraction à plusieurs étages travaillant à contre-courant où il est combiné au mélange recirculant de solvants dans un premier étage (A5), la phase de fond résultant du dernier étage (A4) étant extraite par traversée d'autres zones d'extraction (A3, A2, A1) en contre-courant avec le solvant intégralement mélangeable à l'eau, et la phase d'extrait résultant de ces autres zones d'extraction introduite en dernier étage d'extraction (A4) comme composant du mélange de solvants, en ce que la phase d'extrait du premier étage (A5) est soumise à une distillation pour séparer le solvant mélangeable à l'eau, que la première zone (A1) des autres zones d'extraction (A3, A2, A1) est à reconduire, et en ce que le mélange résiduel est soumis à une extraction de retour, la phase de solvant non mélangeable ou faiblement mélangeable à l'eau étant séparée et reconduite au dernier étage d'extraction (A4) comme composant du mélange de solvants.***

2. Procédé selon revendication 1, caractérisé en que le solvant intégralement mélangeable à l'eau présente dans le mélange de solvants un point d'ébullition inférieur au solvant non mélangeable ou faiblement mélangeable à l'eau.

3. Procédé selon les revendications 1 et 2, caractérisé en que sont utilisés en tant que solvants non mélangeables ou faiblement mélangeables à l'eau, les cétones aliphatiques ou cycliques C₄-C₁₀, ou éthers, ou alcools C₄-C₈ préférentiellement toutefois méthylisopropylcétone, diisopropylcétone, méthyl-i-butylcétone, diisobutylcétone, cyclohexanone, diisopropyléther, diisobutyléther, i-amylalcool et hexanol.

4. Procédé selon les revendications 1 à 3, caractérisé en ce sont utilisés en tant que solvants intégralement mélangeables à l'eau, les alcools C₁-C₃, préférentiellement méthanol, éthanol, i-propanol, n-propanol ou acétone.

5. Procédé selon les revendications 1 à 4, caractérisé en que la teneur en alcali de l'acide phosphorique, calculé comme oxyde, est comprise à l'extraction et/ou à la phase de pré-nettoyage avec le mélange organique de solvants entre 0,1 et 3 % du poids, préférentiellement entre 0,4 et 1 % du poids de l'acide phosphorique.

6. Procédé selon les revendications 1 à 5, caractérisé en que la teneur en alcali est fixée dans l'acide phosphorique par mélange avec la solution de lavage reconduite soit pendant le pré-nettoyage, soit pendant l'extraction.

7. Procédé selon les revendications 1 à 6, caractérisé en que la phase de solvant résultant de l'extraction de retour, contenant encore une faible quantité d'acide phosphorique, est neutralisée avec de l'hydroxyde alcalin aqueux de pH 2.

8. Procédé selon les revendications 1 à 7, caractérisé en que le pré-nettoyage de l'acide brut comprend tant des réactions de précipitation avec le CaCO₃ ou le phosphate minéral, le sulfure de sodium et l'acide silicique actif, qu'une adsorption au moyen de charbon actif.
